# EUROPEAN PATENT SPECIFICATION

(11) **EP 1 085 307 B1**
(45) Date of publication and mention of the grant of the patent: **23.11.2005**
(21) Application number: 00308107.2
(22) Date of filing: 18.09.2000
(51) Int. Cl.: G01J 5/08, G02B 27/20

(54) **Attachment for adjusting the beam pattern of a laser pointer**
Zusatzgerät zur Regelung der Strahlverteilung eines Laserzeigers
Dispositif auxiliaire pour ajuster la configuration du faisceau d'un pointeur à laser

(30) Priority: 17.09.1999 US 154591 P; 28.02.2000 US 185385 P; 19.04.2000 US 198384; 07.03.2000 US 187400 P
(43) Date of publication of application: 21.03.2001
(73) Proprietor: Hollander, Milton Bernard, Stamford, Connecticut 06903 (US)
(72) Inventor: Hollander, Milton Bernard, Stamford, Connecticut 06903 (US)
(74) Representative: Warren, Anthony Robert

(56) References cited:
- US-A- 5 450 148
- US-A- 5 524 984
- PATENT ABSTRACTS OF JAPAN vol. 1996, no. 09, 30 September 1996 (1996-09-30) & JP 08 122701 A (MORITETSUKUSU:KK), 17 May 1996 (1996-05-17)

## Description

### FIELD OF THE INVENTION

The present invention relates generally to the projection of laser beams for the directional aiming of apparatus such as radiometer instruments, which may be used for ascertaining the temperature of a surface using infra-red measurement techniques, and more particularly to such apparatus which utilises a laser sighting device arranged to project one or more laser sighting beams onto a target for identifying on the surface of the target an energy zone thereof, the temperature of which is to be measured.

It is useful, in the operation of such laser beam projection apparatus, to have the facility to change the number and/or configuration of beams which are issued from the laser beam projector.

By way of example, in a first case it may be desirable to have a single beam which is axial and which gives rise to a single central illuminated spot on the target area to be investigated. In a second case it may be desirable to have a plurality of laser beams which produce illuminated spots on , for example, the periphery of a target area of a surface to be investigated. The selected production of a single spot, by a single laser beam, and of a plurality of spots by a plurality of laser beams, is conveniently arranged by providing a beam splitter, which may be for example a diffraction lens or grid, which can be brought into and out of operation with respect to a single laser beam produced by the beam generator.

When a single laser beam is divided, by the beam splitter, into a plurality of beams, there is a corresponding proportional lowering of the strength of each of the plurality of beams, as compared with that of the single central beam.

According to the degree of sub-division of the single beam, the strength of each of the plurality of beams may then become too low to be of practical use, i.e. the illumination provided by each of them on the surface of the target may be too weak to see clearly, especially in bright ambient light,or at a relatively long distance which may be essential in the investigation of a target surface which is at a very high temperature.

It is not possible to overcome this factor of change of intensity, as between the single beam and the plurality of beams by merely increasing proportionately the power of the single beam when it is to be subdivided, because there are legal and practical restrictions on the use of laser beams because of the possible danger to the user, e.g. the damaging of eyesight. A requirement currently in force for a Class 111A Laser Diode is that the maximum output be less than 5 milliwatts.

It is known in practice in the art to utilise hand-held instruments, such as radiometers, which incorporate a laser beam generator for aiming a beam, or beams, at a target area, and a heat-sensitive device for measuring the radiation which is emitted by the targeted area of a heated surface. Unless provision can be made for changing of the strength of the laser beam, there is always a limitation of (a) the number of beams which can usefully be obtained from splitting of a single beam, and (b) the effectiveness of the instrument, used with a distant target, because of the resultant relatively lowered illuminating power of each of the beams which is split from the original single beam.

### OBJECT OF THE INVENTION

It is an object of the invention to provide an improvement to laser beam projection instruments having provision for projecting a single,e.g. axial, beam ; and for dividing that single beam into a plurality of beams, by which the relative power of the single beam, and of the plurality of beams, can be varied so that the power of the multiple beams can be increased while still remaining within acceptable limits.

### SUMMARY OF THE INVENTION

According to the present invention, there is provided an instrument for generating a primary laser beam, as defined in claim 1.

In one embodiment of the invention, in a laser beam projection instrument, the power of a single primary beam is variable at its stage of generation such that its power is attenuated to an acceptable level while the single beam is being used, and is increased when a plurality of secondary beams are produced, to enhance the utility of the instrument at a distance from a target, while nevertheless keeping the power of the plural beams at an acceptable level.

In another embodiment of the invention, in a laser beam projection instrument, the power of the single beam is made initially substantially higher than would be safe if used alone so as, when it is sub-divided into a plurality of beams, to permit that plurality of beams each to have a usefully enhanced power, and whereby the power of the single beam is reduced by attenuation, when used as a single beam, so as to remain within acceptable limits.

### BRIEF DESCRIPTION OF THE DRAWINGS

Preferred embodiments of the invention will now be described in connection with the accompanying drawings, wherein:
Figure 1 is a side elevation of a representative pistol-type radiometer instrument shown in its condition of operation in which a single axial laser beam is produced;
Figure 2 is a side elevation of the radiometer instrument shown in its condition of operation in which the single laser beam has been divided into a plurality of beams;
Figure 3 is a side elevation of the radiometer instrument shown with a demountable attachment at its front end serving for optional production of multiple beams from a normally single beam device;
Figure 4 is an elevation, to an enlarged scale, of a first form of attachment for the radiometer; and
Figure 5 is an elevation,to an enlarged scale, of a second form of attachment for the radiometer.

### DESCRIPTION OF THE PREFERRED EMBODIMENTS

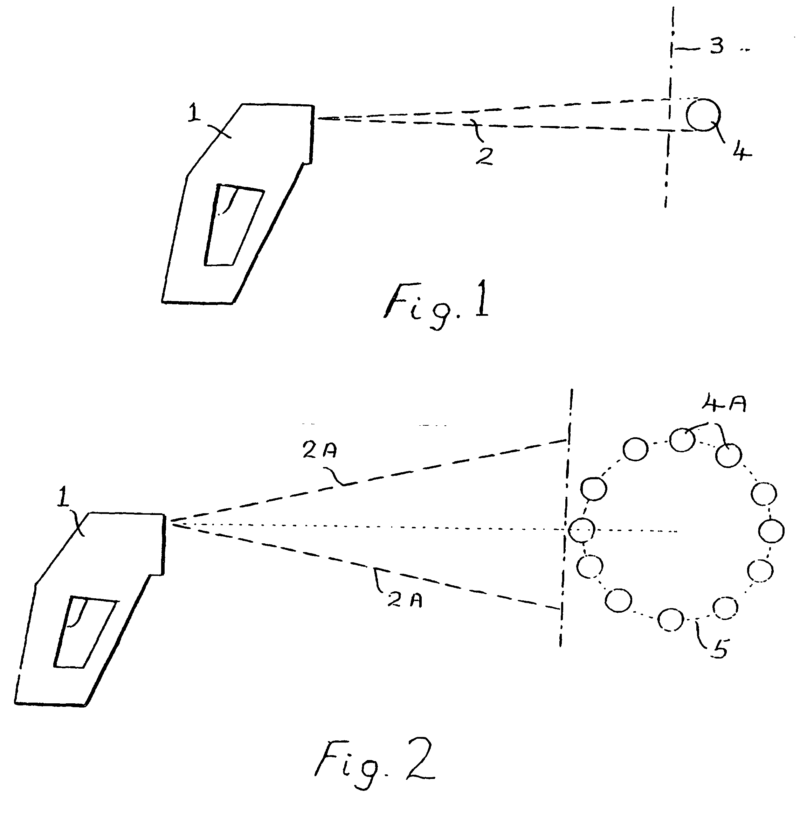

Referring to Figure 1 of the drawings there is shown a radiometer instrument 1 incorporating a laser beam production means which produces a single axial laser beam 2 which is directed at a target 3 and produces on the target an illuminated spot 4.

Referring to Figure 2 of the drawings there is shown the same radiometer instrument in an alternative manner of operation in which it produces a plurality of beams 2A which produce on the target a plurality of spots 4A arranged in a circle to define an area 5.

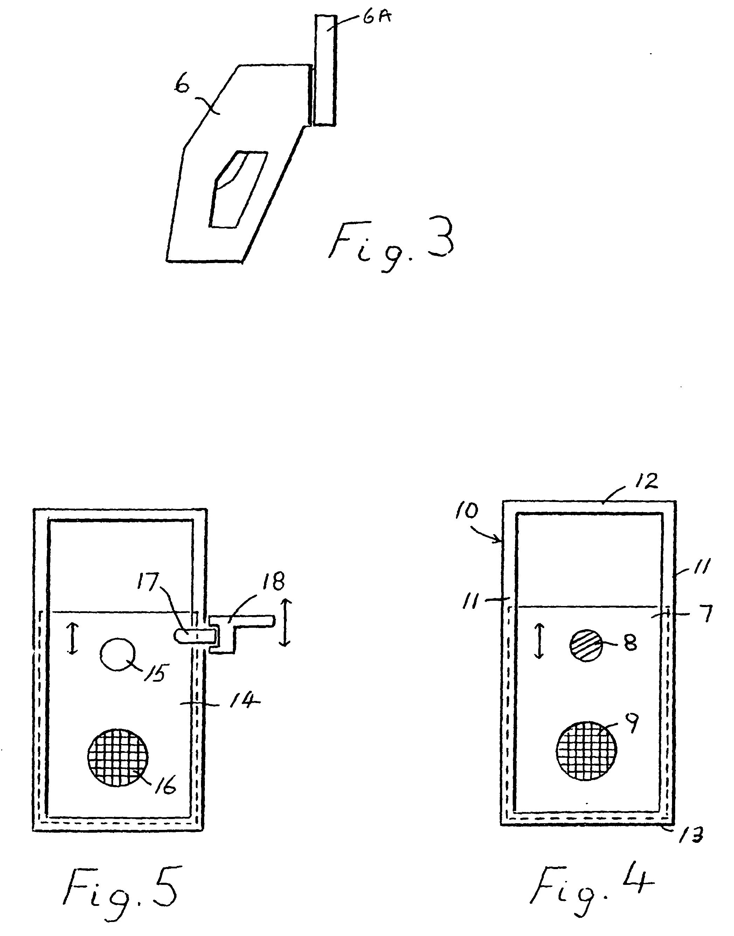

Referring to Figure 3 of the drawings there is shown a further embodment 6 of radiometer instrument which has at its front end a demountable attachment 6A which is adjustable, in the manner described below with reference to Figures 4 and 5, to produce selectively a single axial laser beam and a plurality of spaced laser beams for defining an area of a target;

Referring to Figure 4 of the drawings, the attachment in a preferred embodiment of the best known mode incorporates a slide 7 which has in it a first opening 8 containing an attenuator device, and a second opening 9 containing a beam splitter lens. When the slide is in its lowermost position, on the front of the instrument, the attenuator in opening 8 is presented in front of the laser beam source and reduces the strength of the single axial laser beam produced. When the slide is in its uppermost position, the beam splitter in opening 9 is presented in front of the laser beam source, and a plurality of beams (2A in Figure 2) are produced. To retain the slide in position on the instrument, there is provided a slideway 10, for mounting on the radiometer instrument, having undercut lateral arms 11,11 in which the slide can move vertically, and upper and lower stops 12 and 13 limiting the up and down movement of the slide .

Referring to Figure 5 of the drawings, a slide 14 for mounting on the front of the instrument has a plain opening 15 at its upper part, and a beam splitter lens 16 at its lower part. The slide 14 is movable vertically within limits, in a slideway, similar to that shown in Figure 4 for mounting on the radiometer instrument. On one side of the slide 14 there is mounted a lug 17 which is positioned to engage with a switch arm 18 on the instrument. The switch is incorporated in the power circuitry of the laser in the radiometer 6 (Figure 3) and according to the raised or lowered position of the switch arm 18, as the case may, the laser is operated at full power or lowered power. When the slide 14 is in lowered position, and the plain hole opening 15 is presented in front of the laser generator, the power of the laser is at a reduced scale which is safe and acceptable in use. When the slide 14 is in raised position, and the beam splitter is presented in front of the laser generator of the radiometer 6, the power of the laser is at an increased scale so that the plurality of beams produced by the splitter can each have adequate increased power for acceptable visibility on the target.

The attachment may serve as an "add on" item which can be used for upgrading of existing laser radiometers and like instruments in which a wide differentiation between the power of the single beam, and of the plurality of beams, would otherwise be detrimental. Some existing radiometers may incorporate means to vary the laser brightness, but with the present invention there is the assurance that the brightness will be automatically maintained at a preferred level within safety limits.

In an apparatus where a single centering beam is then switched to become twelve area-defining beams, the change of intensity of each area-defining beam could be upgraded by a factor of twelve. A similar degree of down-grading of power would occur when the area-defining beams are switched back to provide a single centering beam. Thus, although the power utilised at the target in providing the area defining beams is perhaps twelve times that permitted for a single beam, there is nevertheless no risk of exposure to a higher power factor. Another way in which the power used in each beam, and particularly in the greater number of beams, can vary is to pulse the laser so as to have periods of being "on" and "off", or of lower average power and higher average power,alternately, with the result that a higher power laser can be used in a unit having average optical power output.

Change of the power utilised, from and into the respective factor, is obtained in a further embodiment of the invention by the use of attenuator means. By way of example such an attenuator, in one embodiment, is a member which is movable, say by sliding or twisting, by the operator or by a mechanism controlled by the operator or set to operate automatically so as to present different configurations such as patterns, or obscured or non-obscured areas, or areas having varied degrees of attenuation, in the path of the or each beam. In another embodiment, the attenuator, such as an adjustable iris, is arranged to vary the focus and brightness of an optical device through which the beam or beams is or are passed.In an alternative embodiment the attenuator is linked to the beam-changing means so that when the number of subsidiary beams is increased, which would otherwise reduce their individual power proportionately, the power of the main beam, or beams, is increased proportionately. This may result in the original output power of the main beam or beams being greater than the safety limits mentioned above but the visible output of the apparatus at the target can still remain within the safety limits. In a further embodiment, such an attenuator is incorporated in, for example, a movable member such as a turret or slide linked to a manual change-over control of the apparatus, or actuated automatically and sequenced in synchronism with the sequenced changing over of the single beam to multiple beam operation. The laser light, in another embodiment, is passed through a shutter mechanism which is automatic or manual.

In further embodiments of the invention, the attenuator is a beam splitting system which permits only a portion of a beam to be transmitted, or else is a beam-strength-reducing arrangement such as a partially opaque screen, or an opaque disk centered in the beam.

It is a property of the combination of the human eye and brain that there is retention of a latent image for a short period of time, with the result that for example an illumination which is being pulsed "on" and "off" in sufficiently rapid succession, as in a movie film, may appear to the observer to be a constant illumination. This permits, in accordance with a further embodiment of the invention, the use of a single aiming beam, or a small group of aiming beams, and also permits a number of area defining beams to be used in a pulsed manner at a rate greater than the memory of the combination of eye and brain, whilst nevertheless giving to the observer an impression of continuous illumination of the target. In particular, where a plurality of separate beams are disposed along a circle or other area-defining figure, in accordance with a further embodiment of the invention they are caused to move step-by-step, or in continuous motion, along the area-defining figure, e.g. the perimeter thereof, whilst being pulsed simultaneously or sequentially "on" and "off" at a rate, so that to the observer the area-defining figure remains constantly illuminated, as a result of the latent image effect. In this embodiment of the invention, for example, a laser of higher power that is otherwise used in a single continuous, i.e. non-interrupted, beam can be pulsed so as to produce a plurality of beams, e.g. twelve beams each having a pulsing rate for one-twelfth the time of a continuous beam. The viewer's eye retention will, in effect, cause the circle to appear as twelve brighter illuminated spots.

In accordance with further embodiments of the invention, the movement of the plurality of beams is obtained automatically, electronically or mechanically, or by manual actuation by the user of the apparatus, and the pulsing simultaneously and/or sequentially "on" and "off", i.e. the variation of strength, is obtained by variation of power used to generate the beam, or by variation of the proportion of the beam utilised, for example by beam-splitting mechanism such as a multiple-mirror system , or a masking device with areas of different masking capability.

In a further embodiment of the invention, the beam splitter is arranged to provide laser beam spots not only at the periphery of the target area, but also within the target area, including at the center thereof.

In a still further embodiment, the beam splitter is arranged to provide dots, or other illuminated areas, in shapes other than a circle, and for example in the form of a cross.

In accordance with still further improvements of the invention, means provided for the front end of a laser beam generating instrument, for example on a pyrometer, for varying the nature of the beam emitted, are made as an attachment in the form of a separate entity which is mounted removably on the instrument, so as for example to be attachable and detachable, for example utilising a self-tapping thread, as and when desired, and so that attachments with different beam-varying properties may be utilised as required. The attachments may conveniently have relatively movable portions, for example in the form of a slideway, for mounting on the instrument, and a slide movable in the slideway into respective positions in which different forms or degrees of modification of the laser beam are obtained. By way of example, such a movable portion may have positions in which it presents respectively a simple opening or a beam splitter in the path of the laser beam, or again in which it presents a beam attenuator and a beam splitter in the path of the beam. In a further feature, the movable portion of the attachment may serve to actuate switching means, on the instrument, arranged to vary the strength of the laser beam appropriately. In a further embodiment, the attachment provides selective production of, for example, a single central beam of relatively higher power, for aiming at a target to permit accurate sighting on a selected area of the target, combined with a plurality of other or split beams directed at the target for outlining an area thereof, or for producing a pattern of spots on the target. In a further form, the plurality of beams may be shifted from time to time, say in a circle, so as more clearly to outline a selected area of the target. In yet another form, the attachment provides projection of split beams which strike the target as a closed loop figure, such as a circle. In yet another arrangement, the attachment is constructed to divert a single laser beam to strike successive plural points on a target so as effectively to outline an area thereof, and preferably with a rapidity sufficient to result in persistence of vision giving the impression of a full continuous illumination of the line of successive points.

## Claims

1. An instrument having means for generating a primary laser beam emitted therefrom along a path towards a target, and provided with an attachment (6A), said attachment comprising:
(i) a body structure (10, 11) mounted on the instrument,
(ii) a carrier (7; 14) supported by said body structure, said carrier being movable with respect to said body structure into a plurality of control positions relative to said primary beam path, said carrier having laser beam modifying means (9; 8; 16) which can be respectively presented in said path according to the position of the carrier relative to said path,
said control positions including a first position in which the carrier is traversed by the primary beam, and a second position in which the primary beam is divided into plural secondary beams by the respective beam modifying means, and
wherein means (8) are provided to attenuate the power of the primary beam when the carrier is in the first position.

2. An instrument as claimed in claim 1, wherein the carrier (7; 14) is slidable, with respect to the body structure (6A), for movement into and out of said relative positions.

3. An instrument as claimed in claim 1 or 2, wherein the laser beam modifying means of said carrier include a laser beam splitter (9; 16) which is presented in said path in said second position of the carrier.

4. An instrument as claimed in claim 3, wherein the laser beam splitter (9; 16) is a diffraction lens.

5. An instrument as claimed in any preceding claim, wherein the laser beam modifying means of said carrier (7; 14) include a laser beam attenuator (8) which is presented in said path in said first position of the carrier.

6. An instrument as claimed in any of claims 1 to 4, including means (18) on said instrument for varying the power of the primary beam, and means (17) on said carrier (14) positioned to actuate the power varying means (18) according to the relative position of said carrier.

7. An instrument as claimed in any preceding claim, which comprises a hand-held radiometer for determining, at a distance, the temperature of a target surface, and which utilises a laser sighting device including said means for generating said primary laser beam.

## Patentansprüche

1. Instrument mit Mitteln zum Erzeugen eines primären Laserstrahls, der hiervon entlang eines Pfades auf ein Ziel zu emittiert wird, wobei das Instrument mit einer Zusatzeinrichtung (6A) ausgestattet ist, wobei die Zusatzeinrichtung (6A) aufweist:
(i) eine Rumpfstruktur (10, 11), die an dem Instrument montiert ist,
(ii) einen Träger (7; 14), der an der Rumpfstruktur gelagert ist, wobei der Träger in Bezug auf die Rumpfstruktur relativ zu dem Pfad des primären Strahls in eine Vielzahl von Steuerpositionen bewegbar ist, wobei der Träger Laserstrahl-Modifizierungsmittel (9; 8; 16) aufweist, die gemäß der Position des Trägers relativ zu dem Pfad jeweils in dem Pfad vorhanden sein können,
wobei die Steuerpositionen eine erste Position, bei der der Träger von dem primären Strahl durchquert wird, und eine zweite Position aufweisen, bei der der primäre Strahl mittels der jeweiligen Strahl-Modifizierungsmittel in eine Vielzahl von sekundären Strahlen aufgeteilt wird; und
wobei Mittel (8) vorgesehen sind, um die Leistung des primären Strahls zu dämpfen, wenn der Träger sich in der ersten Position befindet.

2. Instrument nach Anspruch 1, wobei der Träger (7; 14) in Bezug auf die Rumpfstruktur (6A) verschiebbar ist, und zwar zur Bewegung in die relativen Positionen und aus den relativen Positionen heraus.

3. Instrument nach Anspruch 1 oder 2, wobei die Laserstrahl-Modifizierungsmittel des Trägers einen Laserstrahlteiler (9; 16) aufweisen, der in der zweiten Position des Trägers in dem Pfad vorhanden ist.

4. Instrument nach Anspruch 3, wobei der Laserstrahlteiler (9; 16) eine Diffraktionslinse ist.

5. Instrument nach einem der vorhergehenden Ansprüche, wobei die Laserstrahl-Modifizierungsmittel des Trägers (7; 14) einen Laserstrahldämpfer (8) aufweisen, der in der ersten Position des Trägers in dem Pfad vorhanden ist.

6. Instrument nach einem der Ansprüche 1 bis 4, mit Mitteln (18) an dem Instrument zum Variieren der Leistung des primären Strahls, und mit Mitteln (17) an dem Träger (14), positioniert, um die Leistungsvariierungsmittel (18) gemäß der relativen Position des Trägers zu betätigen.

7. Instrument nach einem der vorhergehenden Ansprüche, mit einem in der Hand zu haltenden Radiometer zum Bestimmen von einer Entfernung aus der Temperatur einer Zieloberfläche, wobei das Instrument eine Laservisiereinrichtung verwendet, die die Mittel zum Erzeugen des primären Laserstrahls beinhalten.

## Revendications

1. Instrument ayant un moyen pour générer un faisceau laser primaire, émis à partir de là, le long d'un trajet, en direction d'une cible, et muni d'une fixation (6A), ladite fixation comprenant :
(i) une structure de corps (10, 11) montée sur l' instrument ;
(ii) un support (7 ; 14) supporté par ladite structure de corps, ledit support étant mobile par rapport à ladite structure de corps dans une pluralité de positions de contrôle relativement audit trajet de faisceau primaire, ledit support ayant des moyens de modification du faisceau laser (9 ; 8 ; 16) qui peuvent être respectivement présentés sur ledit trajet selon la position du support par rapport au dit trajet,
lesdites positions de contrôle comprenant une première position dans laquelle le support est traversé par le faisceau primaire et une seconde position dans laquelle le faisceau primaire est divisé en plusieurs faisceaux secondaires par les moyens respectifs de modification du faisceau, et
dans lequel des moyens (8) sont proposés pour atténuer la puissance du faisceau primaire lorsque le support est dans la première position.

2. Instrument, tel que revendiqué dans la revendication 1, dans lequel le support (7 ; 14) est coulissant, par rapport à la structure de corps (6A), pour permettre un mouvement dans, et hors, desdites positions relatives.

3. Instrument, tel que revendiqué dans les revendications 1 ou 2, dans lequel les moyens de modification du faisceau laser dudit support comprennent un séparateur de faisceau laser (9 ; 16) qui est présenté sur ledit trajet dans ladite seconde position du support.

4. Instrument, tel que revendiqué dans la revendication 3, dans lequel le séparateur de faisceau laser (9 ; 16) est une lentille de diffraction.

5. Instrument, tel que revendiqué dans l'une quelconque des revendications précédentes, dans lequel les moyens de modification du faisceau laser dudit support (7 ; 14) comprennent un atténuateur de faisceau laser (8) qui est présenté sur ledit trajet dans ladite première position du support.

6. Instrument, tel que revendiqué dans l'une quelconque des revendications 1 à 4, comprenant des moyens (18), sur ledit instrument, pour faire varier la puissance du faisceau primaire et des moyens (17), sur ledit support (14), positionnés pour actionner les moyens de variation de puissance (18) selon la position relative dudit support.

7. Instrument, tel que revendiqué dans l'une quelconque des revendications précédentes, lequel comprend un radiomètre portatif pour déterminer, à distance, la température d'une surface cible et qui utilise un dispositif de visée laser comprenant des moyens pour générer ledit faisceau laser primaire.
